# EUROPÄISCHE PATENTSCHRIFT

(11) **EP 1 352 362 B1**
(45) Veröffentlichungstag und Bekanntmachung des Hinweises auf die Patenterteilung: **20.10.2004**
(21) Anmeldenummer: 01984737.5
(22) Anmeldetag: 28.12.2001
(51) Int. Cl.: G06K 19/077

(54) **DATENTRÄGERANORDNUNG MIT EINER ANZEIGEEINRICHTUNG**
DATA CARRIER ARRANGEMENT WITH A DISPLAY DEVICE
ENSEMBLE SUPPORT DE DONNEES COMPRENANT UN DISPOSITIF D'AFFICHAGE

(30) Priorität: 29.12.2000 DE 10065748
(43) Veröffentlichungstag der Anmeldung: 15.10.2003
(73) Patentinhaber: Infineon Technologies AG, 81669 München (DE)
(72) Erfinder: FREY, Volker, 70199 Stuttgart (DE); MÜLLER, Jochen, 93173 Wenzenbach (DE); RANDLER, Martin, 70561 Stuttgart (DE); TRIER, Bernhard, 73447 Oberkochen (DE)
(74) Vertreter: Epping Hermann & Fischer
(86) Internationale Anmeldenummer: PCT/DE2001/004949
(87) Internationale Veröffentlichungsnummer: WO 2002/054344

(56) Entgegenhaltungen:
- EP-A- 0 542 524
- EP-A- 0 845 695
- DE-A- 19 604 374
- DE-A- 19 631 557
- DE-C- 19 923 138
- US-A- 4 918 631
- US-A- 5 422 516
- US-A- 5 818 030

## Beschreibung

Die Erfindung betrifft eine tragbare Datenträgeranordnung mit einem Kartenkörper und mit einer Anzeigeeinrichtung, wobei die Anzeigeeinrichtung mit dem Kartenkörper verbunden ist und die Verbindung zwischen dem Kartenkörper und der Anzeigeeinrichtung im Bereich gegenüberliegender Flächen vorgesehen ist, wobei die Flächen der Anzeigeeinrichtung und des Kartenkörpers nur in einem Teilbereich fest miteinander verbunden sind.

Immer häufiger werden Anzeigeeinrichtungen, zum Beispiel Flüssigkristall-Displays (LCD), ferroelektrische Flüssigkristall-Displays, cholesterische Flüssigkristall-Displays oder Organic Light Emitting Diodes (OLED) in Datenträgeranordnungen, wie zum Beispiel Chipkarten, Kreditkarten, Geldkarten oder dergleichen eingesetzt. Die Anzeigeeinrichtung muß dabei mechanisch sicher und stabil in den Kartenkörper der Datenträgeranordnung eingebaut werden, um Biegebeanspruchungen begegnen zu können.

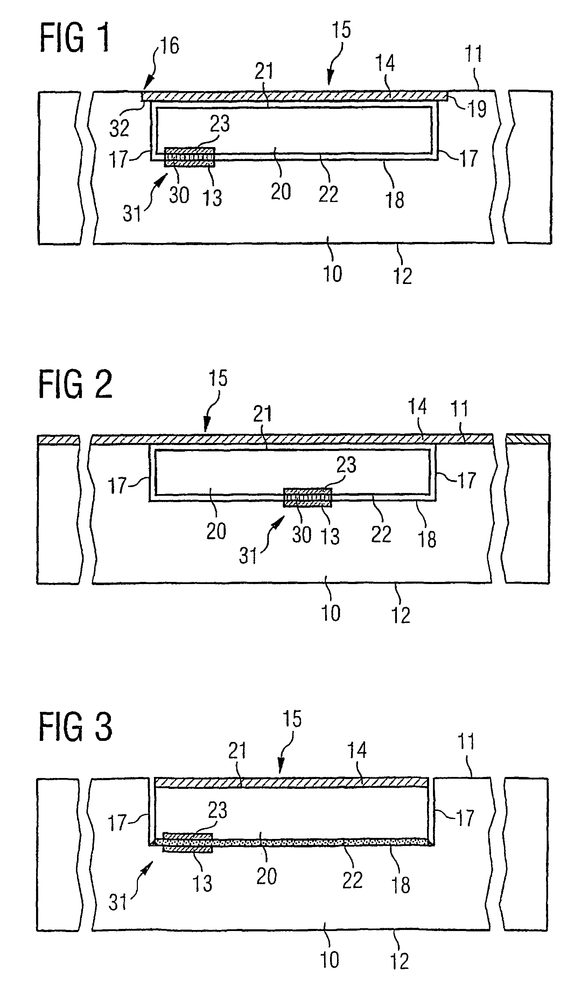

Figur 3 zeigt eine aus dem Stand der Technik bekannte Anordnung einer Anzeigeeinrichtung in einem Datenträger. Üblicherweise weist ein Kartenkörper 10 eine Ausnehmung 15 auf, in der die Anzeigeeinrichtung 20 gelegen ist. Die lateralen Abmaße der Ausnehmung 15 sind dabei an die lateralen Abmaße der Anzeigeeinrichtung 20 angepaßt, wodurch die erste Hauptseite 11 des Kartenkörpers 10 in etwa bündig mit der aktiven Hauptseite 21 der Anzeigeeinrichtung abschließt. Auf der aktiven Hauptseite 21 ist dabei üblicherweise eine Deckschicht 14 gelegen, die mit der Anzeigeeinrichtung 20 fest verbunden ist, und diese mechanisch vor äußeren Einflüssen schützen soll. Auf der passiven Hauptseite 22 der Anzeigeeinrichtung 20 befindet sich ein zweites Kontaktelement 23, das mit einem korrespondierenden ersten Kontaktelement 13 am Boden 18 der Ausnehmung 15 mechanisch und elektrisch verbunden ist. Das erste Kontaktelement 13 ist beispielsweise mit einem (in der Figur nicht gezeigten) Steuerchip in dem Kartenkörper 10 elektrisch verbunden. Zur Herstellung einer mechanischen Verbindung zwischen der Anzeigevorrichtung 20 und dem Kartenkörper 10 ist die passive Hauptseite 22 der Anzeigevorrichtung 20 vollflächig mit dem Boden 18 der Ausnehmung 15 verbunden. Die Verbindung kann dabei durch einen Kleber oder eine Lötverbindung hergestellt sein. Auch die Seitenwände der Anzeigeeinrichtung 20 können mit den Seitenwänden 17 der Ausnehmung 15 zum Beispiel mit einem Kleber verbunden sein.

Die vollflächige Verbindung eines Anzeigefeldes mit einem Kartenkörper ist in dem Dokument US 4,876,441 beschrieben und offenbart die Merkmale aus dem Oberbegriff des Patentanspruchs 1.

Die US 4,918,631 beschreibt eine Chipkarte mit Kalkulationsfunktionen und integriertem LCD-Anzeigefeld, welches, in Polyester vergossen, über spezielle Heißklebeanschlüsse mit den auf dem Kartenkörper befindlichen Pins verbunden ist. Ein am Display befindlicher Leitgummi wird mit Anschlüssen auf der Karte verbunden, so dass eine Verbindung des Anzeigefeldes zum Kartenkörper außerhalb der zwischen Kartenkörper und Anzeigefeld gegenüberliegenden Flächen vorgesehen ist.

Die US 4,876,441 beschreibt den Aufbau einer Chipkarte mit Taschenrechner-Funktion. In der Kreditkarte ist ein Anzeigefeld integriert, welches zwar über "heat seals" (47, 49) mit der Solarzelle (5), jedoch nicht mit der Unterseite der Chipkarte verbunden ist. Die Verbindung zur Oberfläche der Unterseite der Chipkarte wird vollflächig über einen Kleber (51) erzielt, da das Anzeigefeld der dort beschriebenen Chipkarte nicht über die Hauptflächen mit der Chipkarte verbunden ist.

Die US 5,818,030 beschreibt ein Anzeigefeld, welches über Kontaktpins in einen Kartenkörper einsetzbar ist, wobei die Verbindung von Anzeigefeld und Kartenkörper über an sich gegenüberliegenden Flächen angeordnete Kontaktpins erfolgt. Die Verbindung erfolgt jedoch nicht in einem Teilbereich sich gegenüberliegender Hauptflächen und ist jederzeit lösbar.

In der EP 0542524 A1 ist ein elektronisches Notebook beschrieben, wobei ein in ein Gehäuseteil integriertes Display über Scharniere mit einem rechteckigen Unterteil verbunden ist. Da der Gehäuseteil mit integriertem Display lediglich in vertikaler Richtung bewegt werden kann, sind etwaige auf die Anzeigevorrichtung einwirkende Biegebelastungen nicht relevant bzw. vorhanden.

Die DE 19604371 A1 sieht eine Chipkarte (Smartcard) mit Eingabeelementen und einer Anzeigevorrichtung vor, wobei zur Vermeidung von Beschädigungen der inneren Bauteile und Ermöglichung eines elastischen Verbiegens der Smardcard das Anzeigefeld über ein flexibles Band, zur Herstellung einer elektrischen Verbindung, mit der Schaltungsanordnung verbunden ist. Der Kartenkörper weist keine separate Ausnehmung auf, in der die Anzeigeeinrichtung gelegen ist. Weiterhin ist die Befestigung über ein flexibles Band an der Schaltungsanordnung selbst und nicht am Kartenkörper vorgesehen. Die Verbindung zur Schaltungsanordnung ist zwar flexibel, zur Vermeidung auftretender Biegebelastungen, und aufgrund einer durch den Fachmann frei zu dimensionierenden Größe des Bandes nur partiell ausgelegt. Das Anzeigefeld ist jedoch nicht mit dem Boden einer Ausnehmung verbunden.

Ein in der US 5,422,516 beschriebenes Display ist mit einer Platine verbunden, indem seitlich vom Display abgehende Anschlussleitungen an auf der Platine befindliche Halbleiter geführt werden. Die Hauptflächen des Displays und der Platine liegen sich gering beabstandet gegenüber, ohne dass die Hauptflächen fest und unlösbar miteinander verbunden sind.

Die Aufgabe der vorliegenden Erfindung besteht darin, eine mechanisch sichere Befestigungsmöglichkeit für eine Anzeigeeinrichtung in einer Datenträgeranordnung vorzusehen, wodurch eine geringe mechanische Beanspruchung während des Betriebs auf die Anzeigeeinrichtung einwirkt.

Diese Aufgabe wird durch den Gegenstand des Patentanspruchs 1 gelöst.

Durch diese Einbauweise wirken nahezu keine Quer- und Scherkräfte auf die Anzeigeeinrichtung. Hierdurch kann die Zuverlässigkeit der Anzeigeeinrichtung und somit der gesamten Datenträgeranordnung erheblich verbessert werden.

Vorteilhafte Ausgestaltungen sind in den untergeordneten Patentansprüchen angegeben.

In einer bevorzugten Ausgestaltung weist der Kartenkörper auf einer ersten Hauptseite eine erste Aufnehmung auf, in der die Anzeigeeinrichtung gelegen ist. Bei einer Anpassung der lateralen Abmaße der Anzeigeeinrichtung an die Abmaße der ersten Ausnehmung wird hierdurch eine ebene Oberfläche auf der ersten Hauptseite des Kartenkörpers erzielt. Weiterhin bietet die erste Ausnehmung einen Schutz vor mechanischer Beschädigung der Anzeigeeinrichtung.

In einer ersten Ausgestaltung der Erfindung ist die Anzeigeeinrichtung mit einem Teilbereich ihrer passiven Hauptseite mit dem Boden der ersten Ausnehmung fest verbunden. Die zwischen Anzeigeeinrichtung und Kartenkörper wirkenden Quer- und Scherkräfte werden dann besonders gering, wenn gemäß einer weiteren Ausgestaltung die feste Verbindung zwischen der Anzeigeeinrichtung und dem Kartenkörper in einem Randbereich des Bodens der ersten Ausnehmung vorgesehen ist.

In einer zweiten Variante ist die Anzeigeeinrichtung zumindest mit einem Teilbereich ihrer Seitenwand mit einer Seitenwand der ersten Ausnehmung fest verbunden. Sowohl die aktive als auch die passive Hauptseite der Anzeigeeinrichtung weist somit keine feste Verbindung zu dem Kartenkörper auf. Durch beide Varianten wird eine "schwimmende" Lagerung der Anzeigeeinrichtung in dem Kartenkörper erzielt. Die auf die Anzeigeeinrichtung wirkenden Kräfte sind somit auch bei einer starken Beanspruchung des Kartenkörpers, zum Beispiel einer Durchbiegung, auf ein Minimum reduziert.

In den vorher beschriebenen Ausgestaltungen der Erfindung ist es möglich, daß die Anzeigeeinrichtung bereits die entsprechenden Mittel, die die Anzeigeeinrichtung ansteuern, selbst beinhaltet. So kann beispielsweise ein entsprechender Steuerchip, der seine Signale über eine Antenne empfängt, direkt in die Anzeigeeinrichtung integriert sein. Aus diesem Grunde könnte bei einer derartigen Ausgestaltung auch auf elektrische Verbindungsmittel zu dem Kartenkörper beziehungsweise zu im Kartenkörper integrierten Steuerelementen verzichtet werden.

In einer anderen Ausgestaltung sieht die Erfindung vor, daß der Kartenkörper ein erstes Kontaktelement und die Anzeigevorrichtung ein zweites Kontaktelement aufweist, die, elektrisch und mechanisch miteinander verbunden die feste Verbindung bilden. Die Ansteuermittel sind in diesem Fall beispielsweise in einem Chip, der im Kartenkörper gelegen ist, vorgesehen. Der Chip wäre dann über Leiterbahnen mit dem ersten Kontaktelement verbunden. Die feste Verbindung zwischen der Anzeigeeinrichtung und dem Kartenkörper findet vorzugsweise ausschließlich im Bereich des ersten und zweiten Kontaktelementes statt. Die Fläche, mit der die Anzeigeeinrichtung und der Kartenkörper miteinander verbunden sind, bestimmt sich somit ausschließlich durch die Größe der Kontaktelemente. Vorzugsweise ist dieser Bereich kleiner als 10 % der Fläche der passiven Hauptseite der Anzeigeeinrichtung. Der restliche Bereich der Anzeigeeinrichtung weist gemäß dem Gedanken der Erfindung keine feste Verbindung zu dem Kartenkörper auf.

In einer weiteren Ausgestaltung ist zumindest die aktive Hauptseite der Anzeigeeinrichtung von einer Deckschicht bedeckt. Dabei kann die Deckschicht bereits vor dem Einbringen der Anzeigeeinrichtung in den Kartenkörper mit der aktiven Hauptseite verbunden sein. Alternativ kann zunächst die Anzeigeeinrichtung auf dem Kartenkörper platziert werden und anschließend die aktive Hauptseite der Anzeigeeinrichtung bedeckt werden. Die Deckschicht kann auch die gesamte Fläche der ersten Hauptseite des Kartenkörpers einnehmen und dabei die aktive Hauptseite der Anzeigeeinrichtung bedecken.

Vorzugsweise ist die Deckschicht fest mit dem Kartenkörper verbunden, während zu der Anzeigeeinrichtung keine feste Verbindung besteht. In der Konsequenz bedeutet dies, daß die Anzeigeeinrichtung mit dem Kartenkörper beispielsweise lediglich im Bereich des ersten und zweiten Kontaktelementes miteinander verbunden ist. Die mechanischen Belastungen, die bei einer Biegebeanspruchung auf die Anzeigeeinrichtung wirken können, sind somit minimal.

In einer weiteren Ausgestaltung weist der Kartenkörper eine zweite Ausnehmung auf, deren laterale Abmaße größer als die der ersten Ausnehmung sind und die in etwa denen der Deckschicht entsprechen. Dabei sind die jeweiligen Seitenwände der ersten und zweiten Ausnehmung zur Bildung einer Auflagefläche für die Deckschicht in etwa äquidistant angeordnet. Die erste Ausnehmung weist somit größere laterale Abmaße, jedoch eine geringere Tiefe als die erste Ausnehmung auf. Hierdurch ergibt sich ein im Querschnitt stufenförmiger Verlauf der ersten und zweiten Ausnehmung in dem Kartenkörper. Die zwischen der ersten und der zweiten Ausnehmung gebildete Stufe wird dann dazu benutzt, eine Auflagefläche für die Deckschicht zu bilden. Die Tiefe der zweiten Ausnehmung ist dabei an die Dicke der Deckschicht angepaßt, so daß sich im Ergebnis eine ebene Fläche der ersten Hauptseite der Datenträgeranordnung ergibt.

Eine weitere Reduzierung der auf die Anzeigeeinrichtung wirkenden Kräfte kann dadurch erzielt werden, daß zwischen der Deckschicht und der aktiven Hauptseite der Anzeigeeinrichtung ein Gleitmittel vorgesehen ist. Vorzugsweise wird auch zwischen der passiven Hauptseite der Anzeigeeinrichtung und dem Boden der ersten Ausnehmung ein Gleitmittel vorgesehen.

Eine bessere Sicht auf die Anzeigeeinrichtung wird dadurch erzielt, daß die Deckschicht als Polarisator ausgebildet ist.

Die feste Verbindung zwischen der Anzeigeeinrichtung und dem Kartenkörper wird vorzugsweise durch einen Leitkleber hergestellt.

Die Erfindung wird anhand der nachfolgenden Ausführungsbeispiele näher erläutert. Es zeigen:
- Figur 1: ein erstes Ausführungsbeispiel der erfindungsgemäßen Datenträgeranordnung,
- Figur 2: ein zweites Ausführungsbeispiel der erfindungsgemäßen Datenträgeranordnung und
- Figur 3: eine aus dem Stand der Technik bekannte Datenträgeranordnung.

Im folgenden werden gleiche Bezugszeichen für gleiche Elemente verwendet.

In der Figur 1 ist ein erstes Ausführungsbeispiel der erfindungsgemäßen Datenträgeranordnung dargestellt. Auf einer ersten Hauptseite 11 eines Kartenkörpers 10 ist eine erste Ausnehmung 15 vorgesehen. In dieser ist eine an die Abmaße der ersten Ausnehmung 15 angepaßte Anzeigeeinrichtung 20 gelegen. Auf einer passiven Hauptseite 22 weist die Anzeigeeinrichtung 20 ein zweites Kontaktelement 23 auf, das mit einem an entsprechender Stelle gelegenen ersten Kontaktelement 13 des Kartenkörpers 10 mechanisch und elektrisch über einen Kleber 30 verbunden ist. Als Kleber wird vorzugsweise ein Leitkleber verwendet, der auch den elektrischen Kontakt zwischen dem ersten und dem zweiten Kontaktelement sicherstellt. Die Verbindung 31, die durch das erste und zweite Kontaktelement gebildet ist, stellt den einzigen festen Kontakt zwischen der Anzeigeeinrichtung 20 und dem Kartenkörper 10 dar. Das heißt, der restliche Bereich der passiven Hauptseite ist gegenüber dem Boden 18 der Ausnehmung 15 verschiebbar. Eine Verschiebung könnte sich beispielsweise durch eine Durchbiegung des Kartenkörpers ergeben.

Die aktive Hauptseite 21 der Anzeigeeinrichtung 20 wird durch eine Deckschicht 14 geschützt. Die Deckschicht 14 und die Anzeigeeinrichtung 20 haben gemäß den Gedanken der Erfindung keinen Bereich, an dem eine feste Verbindung zueinander besteht. Die Deckschicht 14 ist aus diesem Grund mit dem Kartenkörper 10 fest verbunden. Der Kartenkörper 10 weist zu diesem Zweck eine zweite Ausnehmung 16 auf, die, wie in dem Querschnitt gut ersichtlich ist, etwas größere laterale Abmaße als die erste Ausnehmung 15 aufweist. Hierdurch entsteht ein im Querschnitt stufenförmiger Verlauf. Die Deckschicht 14, die in ihrer Dicke an die Tiefe der zweiten Ausnehmung 16 angepaßt ist, um eine ebene Oberfläche auf der ersten Hauptseite 11 zu erzielen, liegt somit auf Auflagebereichen 32 auf und ist mit diesen und gegebenenfalls mit der Seitenwand 19 zum Beispiel über einen Kleber fest verbunden.

Zur Reduzierung von Quer- und Scherkräften, die bei einer Durchbiegung auftreten können, wird vorteilhafterweise zwischen der Unterseite der Deckschicht 14 und der aktiven Hauptseite 21 sowie zwischen dem Boden 18 und der passiven Hauptseite ein Gleitfilm eingebracht. Dieses Gleitmittel kann beispielsweise ein Silikon-Öl sein.

Durch die feste Verbindung zwischen der Deckschicht 14 mit dem Kartenkörper 10 wird eine hermetische Versiegelung der ersten Ausnehmung erzielt. Die Deckschicht 14 ist vorzugsweise als Polarisator ausgeführt, der einerseits eventuell entstehende Schmelzmarkierungen im Bereich der Verbindung 31 abdecken kann und andererseits die Ablesbarkeit der Anzeigeeinrichtung erhöht.

In der Figur 1 ist die Verbindung 31, die aus dem ersten und dem zweiten Kontaktelement 13, 23 gebildet ist, in einem Randbereich des Bodens 18 der ersten Ausnehmung 15 gelegen. Diese Ausgestaltung ermöglicht eine besonders gute Reduzierung von Scherkräften. Wie aus der Figur 2 ersichtlich ist, kann die Verbindung 31 im gesamten Bereich der passiven Hauptseite 22 der Anzeigeeinrichtung gelegen sein. Gegenüber den aus dem Stand der Technik bekannten Anordnungen wird in jedem Fall eine Streßreduzierung auf die Anzeigeeinrichtung erzielt.

Das zweite Ausführungsbeispiel gemäß der vorliegenden Figur 2 unterscheidet sich von dem ersten Ausführungsbeispiel weiterhin dadurch, daß der Kartenkörper 10 lediglich eine erste Ausnehmung 15 aufweist. Dadurch, daß die Deckschicht 14 auf die gesamte Hauptseite 11 des Kartenkörpers aufgebracht ist, besteht keine Notwendigkeit, eine zweite Ausnehmung vorzusehen, die eine Auflagefläche für die Deckschicht bildet. Die zweite Variante ermöglicht eine besonders ebene Oberfläche der erfindungsgemäßen Datenträgeranordnung.

Die Erfindung ermöglicht eine Datenträgeranordnung, bei dem die Anzeigeeinrichtung nur in einem Teilbereich fest mit dem Kartenkörper verbunden ist. Es erfolgt somit keine flächige Verbindung der Anzeigeeinrichtung mit dem Kartenkörper. Demzufolge ist die Anzeigeeinrichtung gleitfähig gegenüber dem Kartenkörper sowie einer gegebenenfalls vorhandenen Deckschicht. Hierdurch lassen sich auf die Anzeigeeinrichtung wirkende Belastungen, zum Beispiel durch eine Durchbiegung, stark verringern.

### Bezugszeichenliste

- 10: Kartenkörper
- 11: erste Hauptseite
- 12: zweite Hauptseite
- 13: erstes Kontaktelement
- 14: Deckschicht
- 15: erste Ausnehmung
- 16: zweite Ausnehmung
- 17: Seitenwand
- 18: Boden
- 19: Seitenwand
- 20: Anzeigeeinrichtung
- 21: aktive Hauptseite
- 22: passive Hauptseite
- 23: zweites Kontaktelement
- 27: Seitenwand
- 30: Kleber
- 31: Verbindung
- 32: Auflagefläche

## Patentansprüche

1. Tragbare Datenträgeranordnung mit einem Kartenkörper (10) und mit einer Anzeigeeinrichtung (20), wobei der Kartenkörper (10) auf einer ersten Hauptseite (11) eine erste Ausnehmung (15) aufweist, in der die Anzeigeeinrichtung (20) gelegen ist, und die Anzeigeeinrichtung (20) mit dem Kartenkörper (10) fest verbunden ist,
**dadurch gekennzeichnet, daß**
eine einem Boden (18) der Ausnehmung (15) zugewandte passive Hauptseite (22) der Anzeigeeinrichtung (20) und der der passiven Hauptseite (22) der Anzeigeeinrichtung (20) gegenüberliegende Boden der Ausnehmung (15) des Kartenkörper (10) nur in einem Teilbereich des Bodens (18) eine unlösbare Verbindung (31) aufweisen.

2. Datenträgeranordnung nach Anspruch 1,
**dadurch gekennzeichnet, daß**
die unlösbare Verbindung (31) zwischen der Anzeigeeinrichtung (20) und dem Boden (18) des Kartenkörper (10) in einem Randbereich des Bodens (18) der ersten Ausnehmung vorgesehen ist.

3. Datenträgeranordnung nach Anspruch 1,
**dadurch gekennzeichnet, daß**
die Anzeigeeinrichtung (20) zumindest mit einem Teilbereich ihrer Seitenwand (27) mit einer Seitenwand (17) der ersten Ausnehmung (15) fest verbunden ist.

4. Datenträgeranordnung nach Anspruch 1,
**dadurch gekennzeichnet, daß**
der Kartenkörper (10) ein erstes Kontaktelement (13) und die Anzeigevorrichtung (20) ein zweites Kontaktelement (23) aufweist, die, elektrisch und mechanisch miteinander verbunden, die unlösbare Verbindung (31) bilden.

5. Datenträgeranordnung nach einem der vorhergehenden Ansprüche,
**dadurch gekennzeichnet, daß**
zumindest die aktive Hauptseite (21) der Anzeigeeinrichtung (20) von einer Deckschicht (14) bedeckt ist.

6. Datenträgeranordnung nach Anspruch 5,
**dadurch gekennzeichnet, daß**
die Deckschicht (14) fest mit dem Kartenkörper (10) verbunden ist, während zu der Anzeigeeinrichtung (20) keine feste Verbindung besteht.

7. Datenträgeranordnung nach Anspruch 5 oder 6,
**dadurch gekennzeichnet, daß**
der Kartenkörper (10) eine zweite Ausnehmung (16) aufweist, deren laterale Abmaße größer als die der ersten Ausnehmung sind und die in etwa denen der Deckschicht (14) entsprechen, wobei die jeweiligen Seitenwände (17, 19) der ersten und zweiten Ausnehmung (15, 16) zur Bildung einer Auflagefläche (32) für die Deckschicht (14) in etwa äquidistant angeordnet sind.

8. Datenträgeranordnung nach Anspruch 6 oder 7,
**dadurch gekennzeichnet, daß**
zwischen der Deckschicht (14) und der aktiven Hauptseite (21) der Anzeigeeinrichtung (20) ein Gleitmittel vorgesehen ist.

9. Datenträgeranordnung nach einem der vorhergehenden Ansprüche,
**dadurch gekennzeichnet, daß**
zwischen der passiven Hauptseite (22) der Anzeigeeinrichtung (20) und dem Boden (18) der ersten Ausnehmung (15) ein Gleitmittel vorgesehen ist.

10. Datenträgeranordnung nach einem der Ansprüche 5 bis 9,
**dadurch gekennzeichnet, daß**
die Deckschicht (14) ein Polarisator ist.

11. Datenträgeranordnung nach einem der vorhergehenden Ansprüche,
**dadurch gekennzeichnet, daß**
die feste Verbindung (31) durch einen Leitkleber hergestellt ist.

## Claims

1. Portable data storage arrangement having a card base (10) and a display device (20), the card base (10) containing on a first face (11) a first recess (15) in which the display device (20) is placed, and the display device (20) being fixed to the card base (10),
**characterized in that**
a passive face (22), facing a floor (18) of the recess (15), of the display device (20), and the floor, opposite the passive face (22) of the display device (20), of the recess (15) of the card base (10) contain an unreleasable connection (31) only in a section of the floor (18).

2. Data storage arrangement according to Claim 1,
**characterized in that**
the unreleasable connection (31) between the display device (20) and the floor (18) of the card base (10) is provided in an area at the edge of the floor (18) of the first recess.

3. Data storage arrangement according to Claim 1,
**characterized in that**
the display device (20) is at least fixed to a side wall (17) of the first recess (15) with a section of its side wall (27).

4. Data storage arrangement according to Claim 1,
**characterized in that**
the card base (10) contains a first contact element (13), and the display device (20) contains a second contact element (23), which form the unreleasable connection (31) by being connected together electrically and mechanically.

5. Data storage arrangement according to one of the preceding claims,
**characterized in that**
at least the active face (21) of the display device (20) is covered by a cover layer (14).

6. Data storage arrangement according to Claim 5,
**characterized in that**
the cover layer (14) is fixed to the card base (10), while having no fixed connection to the display device (20).

7. Data storage arrangement according to Claim 5 or 6,
**characterized in that**
the card base (10) contains a second recess (16), whose lateral dimensions are larger than those of the first recess and approximately the same as those of the cover layer (14), the respective side walls (17, 19) of the first and second recess (15, 16) being positioned approximately equidistantly in order to create a support surface (32) for the cover layer (14).

8. Data storage arrangement according to Claim 6 or 7,
**characterized in that**
a lubricant is provided between the cover layer (14) and the active face (21) of the display device (20).

9. Data storage arrangement according to one of the preceding claims,
**characterized in that**
a lubricant is provided between the passive face (22) of the display device (20) and the floor (18) of the first recess (15).

10. Data storage arrangement according to one of Claims 5 to 9,
**characterized in that**
the cover layer (14) is a polarizer.

11. Data storage arrangement according to one of the preceding claims,
**characterized in that**
the fixed connection (31) is created by a conducting adhesive.

## Revendications

1. Support de données portatif, comprenant un corps (10) de carte et un dispositif (20) d'affichage, le corps (10) de carte comportant sur une première face (11) principale un premier évidement (15), dans lequel est mis le dispositif (20) d'affichage et le dispositif (20) d'affichage étant relié solidement au corps (10) de carte,
**caractérisé en ce qu'**une face (22) principale, passive et tournée vers un fond (18) de l'évidement (15), du dispositif (20) d'affichage et le fond, opposé à la face (22) principale passive du dispositif (20) d'affichage, de l'évidement (15) du corps (10) de carte, n'ont une liaison (31) indéfectible que dans une zone partielle du fond (18).

2. Support de données suivant la revendication 1,
**caractérisé en ce que** la liaison (31) indéfectible entre le dispositif (20) d'affichage et le fond (18) du corps de corps (10) de carte est prévue dans une zone de bord de fond (18) du premier évidement.

3. Support de données suivant la revendication 1,
**caractérisé en ce que** le dispositif (20) d'affichage est relié solidement, au moins par une zone partielle de sa paroi (27) latérale, à une paroi (17) latérale du premier évidement (15).

4. Support de données suivant la revendication 1,
**caractérisé en ce que** le corps (10) de carte a un premier élément (13) de contact et le dispositif (20) d'affichage un deuxième élément (23) de contact, qui sont reliés entre eux électriquement ét mécaniquement et qui forment la liaison (31) indéfectible.

5. Support de données suivant l'une des revendications précédentes,
**caractérisé en ce qu'**au moins la face (21) principale active du dispositif (20) d'affichage est revêtue d'une couche (14) de finition.

6. Support de données suivant la revendication 5,
**caractérisé en ce que** la couche (14) de finition est reliée solidement au corps (10) de la carte, tandis qu'elle n'a pas de liaison solide avec le dispositif (20) d'affichage.

7. Support de données suivant la revendication 5 ou 6,
**caractérisé en ce que** le corps (10) de la carte a un deuxième évidement (16) dont les dimensions latérales sont plus grandes que celles du premier évidement et qui correspond à peu près à celle de la couche (14) de finition, les parois (17, 19) latérales respectives des premier et deuxième évidements (15, 16) étant à peu près équidistantes pour former une surface (32) de support de la couche (14) de finition.

8. Support de données suivant la revendication 6 ou 7,
**caractérisé en ce qu'**il est prévu entre la couche (14) de finition et la face (21) principale active du dispositif (20) d'affichage un lubrifiant.

9. Support de données suivant l'une des revendications précédentes,
**caractérisé en ce qu'**il est prévu entre la face (22) principale passive du dispositif (20) d'affichage et le fond (18) du premier évidement (15) un lubrifiant.

10. Support de données suivant l'une des revendications 5 à 9,
**caractérisé en ce que** la couche (14) de finition est un polariseur.

11. Support de données suivant l'une des revendications précédentes,
**caractérisé en ce que** la liaison (31) solide est ménagée par une colle conductrice.
